# EUROPÄISCHE PATENTANMELDUNG

(11) **EP 1 536 148 A1**
(43) Veröffentlichungstag der Anmeldung: **01.06.2005**
(21) Anmeldenummer: 03027095.3
(22) Anmeldetag: 25.11.2003
(51) Int. Cl.: F16B 11/00, C09J 5/00

(54) **Anordnung und Verfahren zum Applizieren von Klebstoff, Substrat zum Verkleben und Verwendung eines Verkapselungsverfahrens**

(71) Anmelder: Collano AG, 6203 Sempach-Station (CH)
(72) Erfinder: Hoffmann, Alex, 8803 Rüschlikon (CH); Wolf, Thomas, 6204 Sempach-Stadt (CH)
(74) Vertreter: Hepp, Dieter

(57) **Zusammenfassung**

Anordnung zum Applizieren von Klebstoff (2) auf mindestens ein Substrat (7). Die Anordnung besteht aus einer Mehrzahl von abgeschlossenen, mit dem Klebstoff (2) gefüllten Kapseln (1) und einem Trägermaterial (4) zum Bilden und/oder Verbinden der Kapseln (1). Das Trägermaterial (4) ist an den Aussenseiten zumindest teilweise mit einem Haftklebstoff (3) beschichtet. Zudem verfügt die Anordnung über Mittel zum teilweisen Öffnen Kapseln (1), so dass der Klebstoff (2) aus den Kapseln (1) quellen kann.

## Beschreibung

Die Erfindung betrifft eine Anordnung und ein Verfahren zum Applizieren von Klebstoff auf mindestens zwei Substrate, ein Substrat zum Verkleben mit mindestens einem weiteren Substrat und die Verwendung eines Verkapselungsverfahrens gemäss den unabhängigen Patentansprüchen.

Ein Grossteil der Montagearbeiten am Bau wird bisher mit mechanischen Verbindungsmitteln wie Schrauben, Nägeln oder Klammern ausgeführt. Diese Verfahren haben den Nachteil, dass sie relativ zeitaufwendig sind und zudem das zu befestigende Material verletzen. Dadurch werden die Schalldämpfungs-, Brandschutz- oder Luft- bzw. Feuchtigkeitsdichte-Eigenschaften reduziert. Ausserdem sind solche Verbindungen nur punktuell und können nur geringe statische Kräfte übernehmen. Dynamische Kräfte wie sie z.B. bei unterschiedlichen Wärmeausdehnungskoeffizienten entstehen, können durch solche Verbindungen nicht übertragen werden.

Eine Alternative zu solchen Verbindungen bieten Klebeverbindungen. Die Materialien werden nicht verletzt, und der Klebstoff kann grossflächig aufgetragen werden, wodurch deutlich grössere statische Kräfte übernommen werden können. Mit flexiblen Klebstoffen können ausserdem auch dynamische Kräfte abgetragen werden. Ein Nachteil von Klebeverbindungen ist bisher die aufwendige Applikation. Ein Beispiel für ein Klebeverfahren ist Sika-Tack®-Ultrafast der Sika Corporation. Der Klebstoff wird mit einer Pistole auf das Substrat aufgetragen. Beim Auftragen muss sehr sorgfältig gearbeitet werden, damit keine Lufteinschlüsse im Klebstoff entstehen. Zur Fixierung genügt der Klebstoff nicht, externe Haltemittel müssen bis zu dessen Härtung eingesetzt werden. (Produktspezifikationen unter http://www.sikaindustry.com/tds-ipd-stulrafast-ind-us.pdf). Zudem sind viele Klebstoffe hautreizend oder toxisch, was die Handhabung ebenfalls schwieriger macht.

In DD 207 948 wird eine Fugendichtung beschrieben, mit der Bauteile aneinander befestigt werden können. Die Fugendichtung besteht aus Folienstreifen, an deren Rändern Schläuche angeordnet sind, die mit Klebstoff gefüllt werden. Diese abgeschlossenen Schläuche werden vor der Anwendung perforiert, so dass der Klebstoff austreten kann. Ein flexibler Abstandhalter in den Schläuchen verhindert das vollständige Austreten des Klebstoffs, der im Schlauch verbleibende Klebstoff dient als flexibles Fugenelement. Der Nachteil dieser Klebstoffbeutel besteht vor allem darin, dass die Bauelemente bis zum Austrocknen der Klebemasse fixiert gehalten werden müssen. Es besteht das Risiko, dass die Fuge sich nach dem Applizieren noch verschiebt. Ausserdem ist das Anbringen der Perforationen an einen langen Schlauch aufwendig und anfällig für Fehlstellen.

Es ist Ziel der Erfindung, die Nachteile des Bekannten zu vermeiden, insbesondere also ein verbessertes Verfahren und eine Anordnung zum Applizieren von Klebstoff zu schaffen, bei denen eine externe Fixierung entfällt, deren Anwendung schnell und unkompliziert sind, und die breit anwendbar sind, z.B. im Baugewerbe, bei industriellen Prozessen, in der Innenarchitektur, im Strassenbau, oder im Hobby- bzw. Freizeitbereich eingesetzt werden können.

Diese Aufgabe wird mit einer Anordnung und einem Verfahren zum Applizieren von Klebstoff auf mindestens zwei Substrate und der Verwendung des Rotary-Die-Verfahrens zum Verkapseln von Klebstoff gemäss den unabhängigen Patentansprüchen gelöst.

Die erfindungsgemässe Anordnung zum Applizieren von Klebstoff auf mindestens zwei Substrate besteht aus einer Mehrzahl von abgeschlossenen Kapseln, die mit dem Klebstoff gefüllt sind, und einem Trägermaterial, welches die Kapseln zumindest teilweise bildet und/oder verbindet.

Die Kapseln und/oder das Trägermaterial sind zumindest teilweise mit einem Haftklebstoff zur sofortigen Fixierung der Kapseln auf den Substraten beschichtet. Wenn die Kapseln zwischen die Substrate gebracht werden, werden sie durch den Haftklebstoff relativ zueinander in Position gehalten, bis die endgültige Verklebung tragfähig ist. Eine externe Fixierung entfällt somit.

In einer bevorzugten Ausführung ist die gesamte Aussenfläche der Kapseln mit dem Haftklebstoff beschichtet. Dies erleichtert das Anbringen der Kapseln an das Substrat.

Der Haftklebstoff zeichnet sich vorzugsweise dadurch aus, dass er schon bei geringem Andrücken an das Substrat haftet. Ausserdem ist es wichtig, dass der Haftklebstoff mit dem Trägermaterialmaterial verträglich ist. Ein geeigneter Haftklebstoff ist Ecomelt A1 Ex97 der Collano AG.

Das Trägermaterial kann das die Kapseln bildende Material sein. Es ist aber auch möglich, dass das Trägermaterial die Kapseln verbindet, sich aber vom die Kapseln bildenden Material unterscheidet. Ebenso ist es denkbar, dass die Kapseln teilweise aus dem verbindenden Trägermaterial bestehen und teilweise aus einem anderen Material. Der Haftklebstoff kann also auf den Kapseln, auf dem die Kapseln verbindenden Material oder auf beidem aufgebracht sein. Ein besonders geeignetes Trägermaterial sind Schichtstrukturen aus Polyethylen (PE) und Aluminium, insbesondere PE-Aluminium-PE-Folien.

Eine Kapsel im Sinne der Erfindung ist ein abgeschlossener Behälter, in dem Klebstoff lagerbar ist. Die Kapsel besteht vorzugsweise aus einem flexiblem Material und ist bevorzugter Weise luft- bzw. dampfdiffusionsdicht abgeschlossen. Mögliche Materialien für die Kapsel sind zum Beispiel Kunststoffe, Folien, Laminate oder auch Metallfolien.

Form und Grösse der Kapseln hängen vom jeweiligen Verwendungszweck ab. Die Kapseln können als länglicher Schläuche oder vorzugsweise als rundliche Kammern ausgebildet sein. Andere Formen, z.B. eckige, sind ebenfalls denkbar. Vorzugsweise sind die Kapseln zumindest an einer Seite abgeflacht, was das Anbringen an ein flaches Substrat erleichtert. Gewölbte Ansetzflächen sind aber ebenso denkbar. Der Durchmesser einer ungefähr runden Kapsel liegt vorzugsweise im Bereich von 2 - 30 Millimetern, je nach Anwendungsbereich können aber auch deutlich grössere Kapseln verwendet werden.

Der Klebstoff ist vorzugsweise ein feuchtigkeits- oder sauerstoffreaktiver Klebstoff, z.B. Purbond® A 1970 der Collano AG. Die Anordnung kann aber auch zum Auftragen eines Mehr-Komponenten-Klebers verwendet werden, indem z.B. benachbarte Kapseln mit je einer der Komponenten z.B. eines Zweikomponenten-Klebers gefüllt werden. Beim Auslaufen der Komponenten aus den Kapseln vermischen sich diese und reagieren zusammen zu einem Klebstoff. Mehrere Komponenten eines Mehr-Komponenten-Klebers können auch innerhalb einer einzigen Kapsel mit mehreren Kammern angeordnet sein.

In einer weiteren bevorzugten Ausführung sind mehrere Kapseln durch ein Trägermaterial zu einem Streifen oder einer Matrix verbunden, wobei unter Matrix verstanden wird, dass die Kapseln in zwei Dimensionen benachbart angeordnet sind.

In der Anordnung können auch Abstandhalter vorgesehen sein. Vorzugsweise sind diese über das Trägermaterial mit den Kapseln verbunden. Die Abstandhalter stabilisieren die Position der Substrate gegeneinander. Besonders bevorzugt sind die Abstandhalter mit Haftklebstoff beschichtet. Als Abstandhalter eignen sich Holz oder Metalle, aber auch verstärkte klebstoffverträgliche Kunststoffe oder einfach verdickte Abschnitte des Trägermaterials.

Ausserdem ist es bevorzugt, wenn die Anordnung Mittel zum Öffnen der Kapseln aufweist. Durch diese Öffnungen kann der Klebstoff auf die Substrate gelangen.

Besonders bevorzugt ist das Trägermaterial als Netz ausgebildet, das an einer bestimmten Anzahl von Punkten mit jeder Kapsel verbunden ist. Vorzugsweise entstehen die Öffnungen der Kapseln durch das Entfernen des Netzes, wobei die Verbindungspunkte Öffnungen in den Kapselwänden zurücklassen.

In einer anderen Ausführungsform sind die Kapseln mit Aufreisslaschen versehen. Durch das Entfernen dieser Laschen, kann der Klebstoff aus den Kapseln hervortreten. Vorzugsweise sind die Laschen von mehreren Kapseln so miteinander verbunden, dass die Kapseln gleichzeitig geöffnet werden können.

Die Kapseln können auch mit Schwächungen versehen sein, welche z.B. durch Druckeinwirkung aufreissen. Dies ist besonders dann von Vorteil, wenn die Kapsel zwischen zwei oder mehr Substrate gepresst wird, z.B. beim Verkleben mehrerer Substrate. Die Schwächungen können beispielsweise durch dünnere Stellen an der Kapselwand realisiert sein. Es ist aber auch denkbar, dass die Kapsel aus verschiedenen Materialien hergestellt wird, die unterschiedliche Stabilität aufweisen.

Das Verfahren zum Applizieren von Klebstoff auf mindestens zwei Substrate wird vorzugsweise mit der oben beschriebenen Anordnung ausgeführt. Dazu wird eine Mehrzahl von mit Klebstoff gefüllten Kapseln mittels eines aussen auf die Kapsel und/oder auf ein Trägermaterial aufgebrachten Haftklebstoffs an mindestens einem Substrat fixiert. Zudem werden den Kapseln geöffnet, um den Klebstoff ausfliessen zu lassen.

Die Kapseln können geöffnet werden, indem Aufreisslaschen entfernt werden.

Eine andere Möglichkeit ist, dass Öffnungen der Kapseln durch Perforationen erzeugt werden. Diese Perforationen sollten vorzugsweise kurz vor oder sogar erst während dem Befestigen der Kapsel am Substrat erzeugt werden, damit der Klebstoff nicht vorzeitig aus der Kapsel hervorquillt. Dies kann realisiert werden, indem eine Verpackung für die Kapseln hergestellt wird, welche mit Perforationszähnen versehen ist, so dass die Kapseln bei der Entnahme aus der Verpackung perforiert werden.

Wenn die Kapseln mit Schwächungen versehen sind, können die Öffnungen auch durch das Aufreissen dieser Schwächungen erzeugt werden. Dies ist dann der Fall, wenn der Innendruck in den Kapseln erhöht wird, z.B. beim aneinander pressen von mehreren Substraten.

Bei der Herstellung der Kapseln kann das herkömmliche Rotary-Die-Verfahren wie beim Verkapseln von Gelatine verwendet werden (W. Fahrig, U. Hofer: "Die Kapsel", Wissenschaftliche Verlagsgesellschaft mbH Stuttgart, 1983). Mit diesem Verfahren lassen sich mit Klebstoff gefüllte Kapseln herstellen, wie sie oben beschrieben sind.

Beim Rotary-Die-Verfahren wird das Kapselmaterial über zwei mit Einbuchtungen versehene Walzen zusammengepresst. Unmittelbar vor dem Pressen wird der Klebstoff am Berührungspunkt der beiden Walzen auf das Kapselmaterial aufgebracht. In den Einbuchtungen der Walzen formen sich dann die mit dem vorgesehenen Klebstoff gefüllten Kapseln.

Die vorgestellte Anordnung und das Verfahren zum Applizieren von Klebstoff an mindestens zwei Substrate können sehr breit eingesetzt werden. Je nach Grösse und Inhalt der Kapseln kommen sie im Baugewerbe, in der Innenarchitektur oder im Hobbybereich zum Einsatz. Es ist zum Beispiel denkbar, mit diesem Verfahren Parkettböden oder Wandverschalungen zu befestigen oder im Modellbau auf einfache, saubere Weise Bauteile miteinander zu verbinden. Ebenso können Verschalungen und Dachabdeckungen schnell und effizient durchgeführt werden.

Vorteilhaft lässt sich dabei ein Substrat (z.B. eine Verschalung, ein Laminat, ein Fournier etc.) mit einer vorapplizierten Anordnung von Klebstoff-Kapseln versehen, so dass das Substrat direkt auf den vorbereiteten Untergrund aufgebracht und verklebt werden kann.

Im Folgenden werden verschiedene Ausführungsformen anhand von Abbildungen erläutert. Es zeigen:
- Fig. 1:: Schematische Darstellung einer Kapsel im Querschnitt,
- Fig. 2:: Perspektivische Ansicht eines Streifens von Kapseln, während das Trägermaterial entfernt wird,
- Fig. 3a:: Schematische Darstellung eines Streifens von Kapseln in Aufsicht,
- Fig. 3b:: Schematische Darstellung einer Matrix von Kapseln in Aufsicht,
- Fig. 4:: Schematische Darstellung des Auslaufens des Klebstoffs aus der Kapsel,
- Fig. 5:: Schematische Darstellung einer alternativen Ausführungsform in Seitenansicht,
- Fig. 6:: Schematische Darstellung einer alternativen Ausführungsform einer Matrix von Kapseln in Aufsicht,
- Fig. 7:: Schematische Darstellung einer Kapsel der Ausführungsform aus Fig. 4 im Querschnitt,
- Fig. 8:: Schematische Darstellung einer Kapsel aus Fig. 7 zwischen zwei Substraten im Querschnitt
- Fig. 9:: Schematische Darstellung einer Ausführungsform mit einem Abstandhalter im verbindenden Trägermaterial
- Fig. 10:: Schematische Darstellung des Klebeverfahrens mit der Anordnung aus Fig. 9,
- Fig. 11:: Schematische Darstellung des Rotary-Die-Verfahrens,
- Fig. 12:: Schematische Darstellung einer Kapsel mit mehreren Kammern im Querschnitt, und
- Fig. 13a, 13b:: Schematische Darstellungen von alternativen Ausführungsformen der Kapsel.

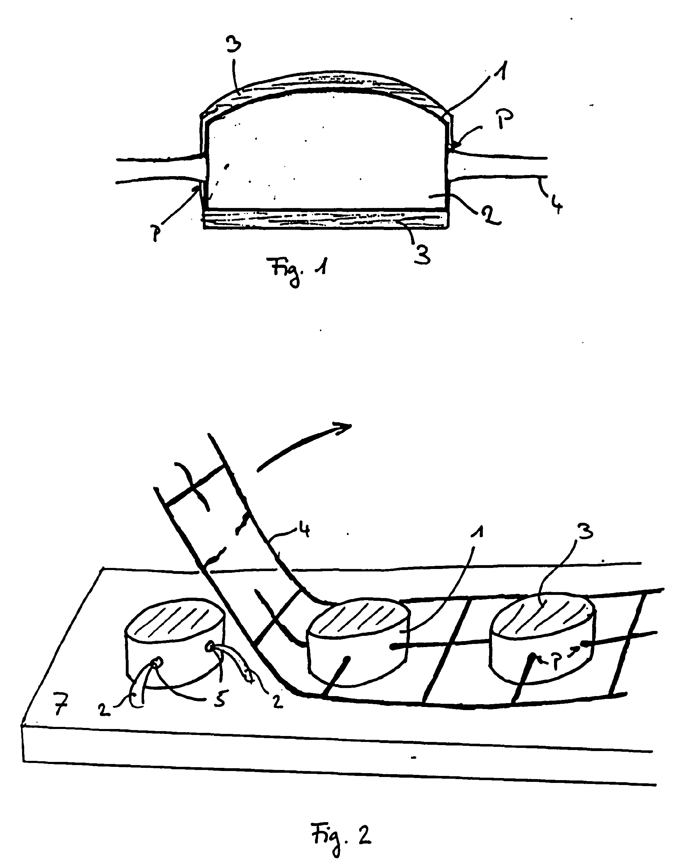

In Fig. 1 ist eine erfindungsgemässe Kapsel 1 im Querschnitt dargestellt. Der Klebstoff 2 befindet sich im Innern der Kapsel. An den Aussenwänden des die Kapsel bildenden Trägermaterials ist der Haftklebstoff 3 aufgebracht. Das Trägermaterial 4 ist als Netz ausgebildet und mit jeder Kapsel 1 an vier Punkten P verbunden. Eine andere Anzahl von Verbindungspunkten ist ebenfalls möglich.

Aus Fig. 2 sind die Kapseln 1 mittels dem Haftklebstoff 3 (an der Unterseite der Kapseln) an einem Substrat 7 befestigt. Es wird ersichtlich, dass beim Entfernen des Trägermaterials 4 Öffnungen 5 an den Kapseln 1 entstehen. Durch diese Öffnungen 5 kann der Klebstoff aus dem Innenraum der Kapsel 1 auf das Substrat 7 quellen. Die Oberseite der Kapseln 1 ist mit Haftklebstoff 3 beschichtet, durch welchen beide Substrate miteinander verbunden werden, bis der aus der Kapsel 1 austretende Klebstoff 2 gehärtet ist. Das Netz aus dem Trägermaterial 4 ist hier nur schematisch dargestellt und kann sowohl anders als auch dichter geflochten sein. Selbstverständlich sind auch andere Formen für das Trägermaterial möglich, z.B. als verbindende Folie.

In einer anderen Möglichen Ausführungsform ist das Trägermaterial 4 zugleich eines der Substrate 7. Dies kann z.B. dann der Fall sein, wenn eine Folie mit dem Verfahren an einem Material befestigt werden soll. Die Kapseln 1 können dann als Teil der Folie ausgeprägt und mit Haftklebstoff 3 beschichtet sein. Die Anordnung kann gleich aussehen, wie in Fig. 2 gezeigt, die Unterseite der Kapseln 1 ist aber nicht mit dem Haftklebstoff 3 am Substrat 7 befestigt sondern bereits bei der Herstellung mit diesem verschweisst. Es ist sogar möglich, dass die Kapseln 1 aus dem gleichen Material bestehen wie das Substrat 7.

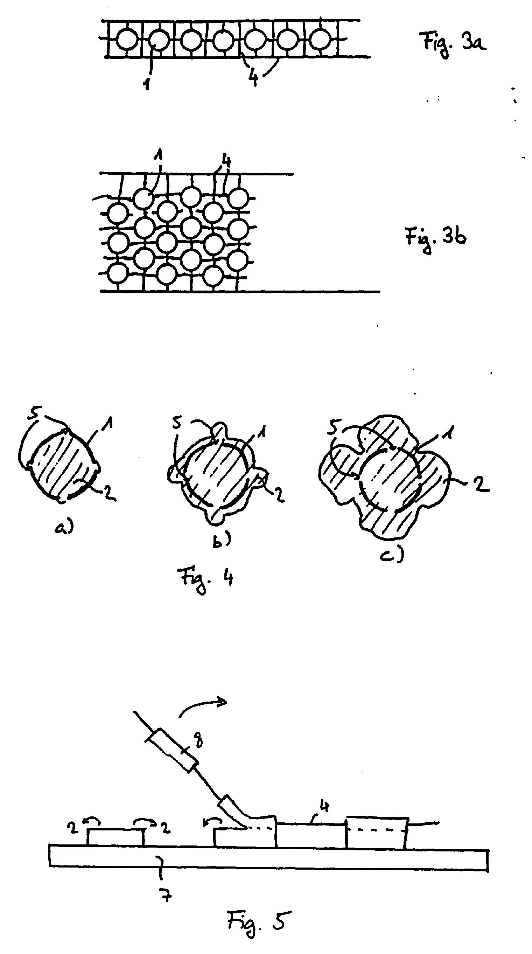

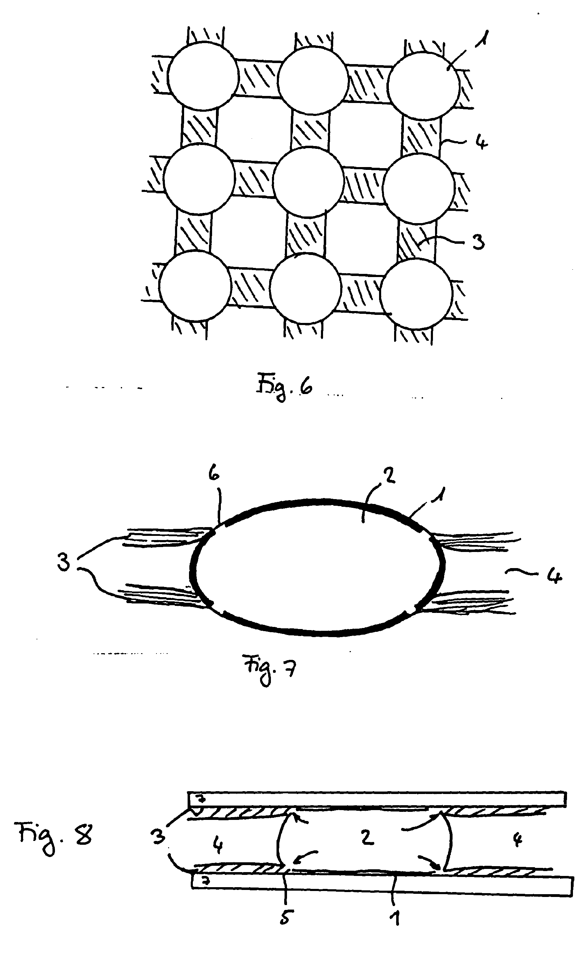

In Fig. 3a ist die Anordnung mehrerer Kapseln 1 zu einem Streifen, in Figur 3b zu einer Matrix dargestellt. Das Netz aus dem Trägermaterial 4 ist wieder nur schematisch angedeutet und kann anders oder dichter geflochten sein.

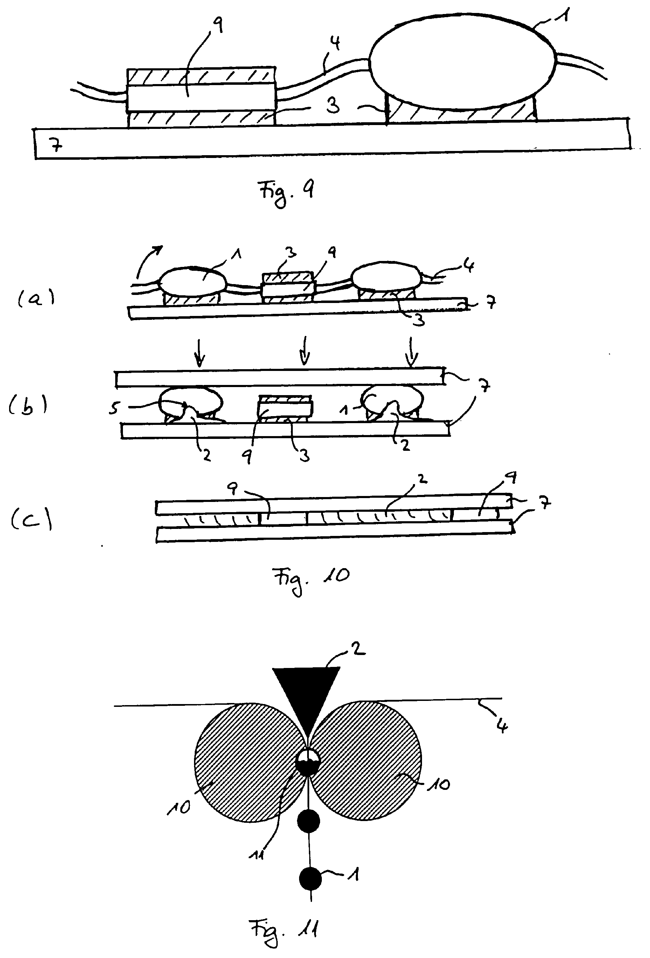

In Fig. 4 ist eine Kapsel 1 dargestellt, nachdem das Trägermaterial 4 entfernt wurde. Durch das Entfernen des Trägers weist die Kapsel an den vier einstigen Verbindungspunkten P Öffnungen 5 auf, durch welche der Klebstoff 2 quillt. Teilfigur a) stellt die Kapsel kurz nach dem Entfernen des Trägers dar, Teilfigur b) und c) nach einiger Zeit des Hervorquellens. Der Klebstoff 2 verteilt sich dabei über die Fläche der Substrate (nicht dargestellt).

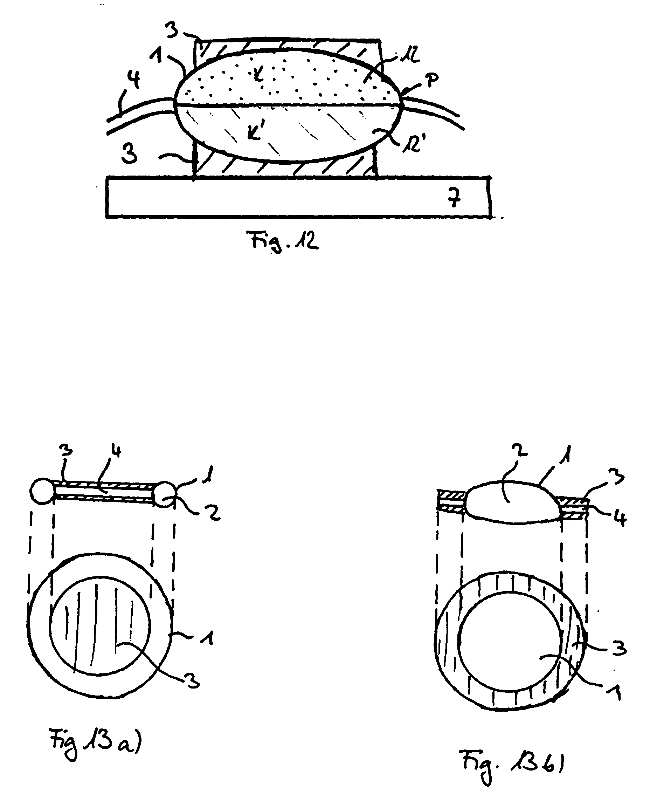

Eine alternative Ausführungsform ist in Fig. 5 dargestellt. Die Kapseln sind mit Aufreisslaschen 8 versehen. Nachdem die Kapseln mit dem Haftklebstoff am Substrat 7 befestigt sind, werden die Laschen 8 entfernt, und der Klebstoff 2 quillt hervor (mit Pfeilen angedeutet).

Ein alternatives Ausführungsbeispiel ist in Fig. 6 dargestellt. Der Haftklebstoff 3 befindet sich in diesem Fall auf dem die Kapseln verbindenden Trägermaterial 4. Wie aus Fig. 7 ersichtlich, weisen die Kapseln Schwachstellen 6 in Form von dünneren Stellen an den Wänden auf. Diese Schwachstellen 6 reissen durch Druckeinwirkung zu Öffnungen 5 auf, durch welche der Klebstoff 2 hervortreten kann.

In Fig. 8 ist eine Kapsel 1 entsprechend Fig. 7 dargestellt, die zwischen zwei Substrate 7 gepresst wurde. Über den Haftklebstoff 3 am Trägermaterial 4, werden die beiden Substrate 7 aneinander fixiert. Durch den Druck reissen die Schwachstellen 6 zu Öffnungen 5 auf, aus welchen der Klebstoff 2, hervorquillt.

Im Ausführungsbeispiel in Fig. 9 ist zwischen den Kapseln 1 ein Abstandhalter 9 eingefügt und durch das Trägermaterial 4 verbunden. Der Abstandhalter 9 ist beidseitig mit Haftklebstoff 3 beschichtet, die Kapseln 1 nur an einer Seite. Mit dieser Seite werden die Kapseln 1 auf das erste Substrat 7 aufgebracht.

In Fig. 10 ist das Klebeverfahren schrittweise dargestellt. In Schritt (a) werden die Kapseln 1 auf das erste Substrat 7 gebracht und das Trägermaterial 4 wird entfernt. Dabei entstehen Öffnungen 5 in den Kapselwänden. Im Schritt (b) wird das zweite Substrat 7 an die Kapseln gedrückt. Das zweite Substrat 7 kann noch nach dem berühren der Kapseln in der Position ausgerichtet werden. Erst wenn es bis an die Abstandhalter gedrückt ist, wird es durch den Haftklebstoff 3 an den Abstandhaltern 9 fixiert. Durch das Andrücken wird der Klebstoff 2 aus den Kapseln 1 gedrückt. In Schritt (c) verbindet der Klebstoff 2 die beiden Substrate 7 bleibend, während die Abstandhalter 9 nur noch als Verstärkung dienen.

In Fig. 11 ist das Rotary-Die-Verfahren schematisch dargestellt. Das die Kapseln bildende Trägermaterial 4 wird über die beiden Walzen 10 zusammengeschweisst. Die Walzen 10 sind mit Einbuchtungen 11 versehen, in welchen die Kapseln 1 gebildet werden. Der Klebstoff 2 wird mit einer Düse in die Einbuchtungen 11 zwischen das Trägermaterial 4 eingespritzt, so dass sich dort mit Klebstoff gefüllte Kapseln bilden. Der Haftklebstoff 3 wird in einem weiteren Arbeitsschritt (nicht dargestellt) auf die Kapseln aufgebracht.

Wie aus Fig. 12 ersichtlich, kann eine Kapsel auch mehrere Kammern K, K' enthalten, die mit unterschiedlichen Komponenten 12, 12' eines Mehr-Komponenten-Klebstoffs gefüllt sind. Beim Auslaufen vermischen sich diese Komponenten und reagieren zu einem Klebstoff. Die Kapsel 1 ist bereits auf das erste Substrat 7 aufgebracht.

Fig. 13 zeigt eine alternative Ausführungsform einer erfindungsgemässen Kapsel 1. In Fig. 13a ist die Kapsel als schlauchförmiger Ring ausgebildet, in dessen Mitte sich das mit Haftklebstoff 3 Trägermaterial 4 befindet. In Fig. 13b ist der Aufbau umgekehrt, in der Mitte befindet sich eine runde Kapsel 1, die mit dem Klebstoff 2 gefüllt ist, darum herum ist ein mit Haftklebstoff 3 beschichtetes Trägermaterial 4 ringförmig angebracht. Mit dieser Anordnung ist es möglich, einzelne Kapseln zum Verkleben von zwei Substraten zu verwenden, was dann von Vorteil sein kann, wenn die Klebefläche klein ist.

## Patentansprüche

1. Anordnung zum Applizieren von Klebstoff (2) auf mindestens zwei Substrate (7), mittels einer Mehrzahl von Kapseln (1), die mit dem Klebstoff (2) gefüllt sind, und mindestens einem Trägermaterial (4) zum Bilden und/oder Verbinden der Kapseln (1),
**dadurch gekennzeichnet, dass** die Aussenseiten der Kapseln und/oder des Trägermaterials (4) zumindest teilweise mit einem Haftklebstoff (4) beschichtet sind.

2. Anordnung nach Anspruch 1, **dadurch gekennzeichnet, dass** die gesamte Aussenfläche der Kapseln (1) mit Haftklebstoff (3) beschichtet ist.

3. Anordnung nach Anspruch 1 oder 2, **dadurch gekennzeichnet, dass** mehrere Kapseln (1) durch ein Trägermaterial (4) zu einem Streifen oder einer Matrix verbunden sind.

4. Anordnung nach einem der Ansprüche 1 bis 3, **dadurch gekennzeichnet, dass** Abstandhalter (9) vorgesehen sind, die vorzugsweise mit Haftklebstoff (3) beschichtet sind.

5. Anordnung nach Anspruch 1 bis 4, **dadurch gekennzeichnet, dass** Mittel zum Öffnen der Kapseln (1) vorgesehen sind.

6. Anordnung nach Anspruch 1 bis 5, **dadurch gekennzeichnet, dass** dass das die Kapseln (1) verbindende Trägermaterial (4) ein Netz ist, wobei das Netz mit jeder Kapsel (1) an einer vorgegebenen Anzahl von Punkten (P) verbunden ist.

7. Anordnung nach Anspruch 4, **dadurch gekennzeichnet, dass** die Kapseln (1) mit einer Aufreisslasche (8) zum Öffnen der Kapseln (1) versehen sind.

8. Anordnung nach Anspruch 7, **dadurch gekennzeichnet, dass** die Aufreisslaschen (8) mehrerer Kapseln (1) derart miteinander verbunden sind, dass die Kapseln (1) gleichzeitig geöffnet werden können.

9. Anordnung nach einem der Ansprüche 1 bis 5, **dadurch gekennzeichnet, dass** die Kapseln (1) Schwachstellen (6) aufweisen, welche ein Aufreissen der Kapseln (1) durch erhöhten Innendruck ermöglichen.

10. Anordnung nach einem der Ansprüche 1 bis 9, **dadurch gekennzeichnet, dass** die Kapseln (1) einen feuchtigkeits- oder sauerstoffreaktivem Klebstoff (2) enthalten.

11. Anordnung nach einem der Ansprüche 1 bis 9, **dadurch gekennzeichnet, dass** die Kapseln in mehrere Kammern (K, K') aufgeteilt sind, welche die Komponenten (12, 12') von einem Mehr-Komponenten-Klebstoff enthalten.

12. Verfahren zum Applizieren von Klebstoff (2) auf mindestens zwei Substrate (7), insbesondere mit einer Anordnung gemäss einem der Ansprüche 1 bis 11,
wobei eine Mehrzahl von mit dem Klebstoff (2) gefüllten Kapseln (1) mittels eines aussen auf die Kapseln (1) und/oder auf ein Trägermaterial (4) aufgebrachten Haftklebstoffs (3) an mindestens einem Substrat (7) fixiert wird, und
die Kapseln (1) geöffnet werden, um den Klebstoff (2) austreten zu lassen.

13. Verfahren nach Anspruch 12, **dadurch gekennzeichnet, dass** die Kapseln (1) geöffnet werden, indem Aufreisslaschen (8) entfernt werden.

14. Verfahren nach Anspruch 12, **dadurch gekennzeichnet, dass** Öffnungen (5) in den Kapseln (1) durch Perforation erzeugt werden.

15. Verfahren nach Anspruch 12, **dadurch gekennzeichnet, dass** Öffnungen (5) durch das Aufreissen von Schwächungen (6) an der Kapselwand erzeugt werden.

16. Verwendung des Rotary-Die-Verfahrens zum Verkapseln von Klebstoff (2) für die Herstellung von Kapseln (1) nach einem der Ansprüche 1 bis 11.

17. Substrat (7) das zum Applizieren auf mindestens ein weiteres Substrat (7) mit Klebstoff versehen ist, **dadurch gekennzeichnet, dass** wenigstens eine Oberfläche des Substrats (7) wenigstens teilweise mit einer Anordnung nach einem der Ansprüche 1 bis 11 versehen ist.
